# EUROPEAN PATENT SPECIFICATION

(11) **EP 1 389 440 B1**
(45) Date of publication and mention of the grant of the patent: **11.07.2007**
(21) Application number: 03254958.6
(22) Date of filing: 08.08.2003
(51) Int. Cl.: A47J 43/08

(54) **Hand blender**
Handmixer
Mixeur à main

(30) Priority: 12.08.2002 US 217101
(43) Date of publication of application: 18.02.2004
(73) Proprietor: Main Power Electrical Factory Ltd., Kowloon, Hong Kong (CN)
(72) Inventor: Lee,William Kwok Kay.C/O M. Power Electr.Fact. Ltd, Kwun tong, Kowlon. (HK)
(74) Representative: Banford, Paul Clifford

(56) References cited:
- GB-A- 511 779
- US-B1- 6 293 691

## Description

### Background to the Invention

### 1. Field of the Invention

The invention relates to Hand Blenders.

### 2. Background Information

Hand blenders, sometimes referred to as Stick Blenders, comprise an elongate work shaft enclosed in a housing. At the top of the housing is a motor for driving the shaft. At the bottom, output end, of the shaft is a blending blade which is introduced into a medium to be blended. The work shaft on typical hand blenders is approximately 6 to 8 inches (150 to 200 millimetres) long.

The work shaft must be securely and robustly mounted within the housing, especially near the blending blade, to facilitate long trouble free life of the blender. Because of the length of the shaft a degree of flex and movement is to be expected which can cause problems with known shaft mounting systems.

US-B1-6 293 691 discloses a hand blender having the features of the pre-characterising portion of claim 1. The document discloses a handheld blender, with a motor driven tool shaft extending in a housing part of the housing of the processing device and having a work performing element secured to the shaft's output end. The housing part becomes a protective shield in the area of the output end of the tool shaft, the shield encompassing the work performing element in a radial direction at least in part and terminating in an opening edge at its lower open end. To ensure that the processing tool is not only adequately protected in an initial position by the shield but also well suited to reduce large pieces of solid foods, means are provided for enabling a relative axial displacement of the work performing element and the opening edge of the shield.

GB 511 779 A discloses a high-speed mixer or stirrer in which the spindle of the motor which rotates at high speed is coupled to the driven spindle in such a way that the latter is free to yield to a transverse force, and to swivel to a limited extent about a point within the bearing. In one form, a tubular mounting is secured to the motor casing and its lower part has shoulders to support the flange of a spherical seating cup. The driven spindle in this case carries a milk stirrer and runs in a journal bearing with an outer spherical surface resting in the cup. The spindles are joined by a flexible, preferably rubber, coupling embracing shouldered bushes on the spindles. The bearing is held in place by a spring, or by a plate secured to the shoulder.

### Summary of the Invention

It is an object of the present invention to provide a hand blender which overcomes or ameliorates the above problem, or which at least provides the public with a useful alternative.

According to a first aspect of the invention there is provided a hand blender including:
an elongate body defining a blending chamber at one end,
a work shaft provided within the body and having an input end and an output end,
a motor within the body and coupled with the input end of the work shaft,
a work element within the blending chamber and coupled to the output end of the work shaft, and
a sleeve provided within the body and having an aperture through which the work shaft passes, characterized in that the sleeve has a substantially convex shaped recess concentric with the aperture, a bush is provided on the work shaft and is adapted to locate within the recess of the sleeve, and in that the bush is fixedly engaged with the work shaft and adapted to rotate within the recess.

Preferably, the hand blender includes a locking washer with tabs for retaining the bush within the recess.

Preferably, the recess is integral with the aperture and the sleeve has a skirt enclosing the bush.

Preferably, the hand blender includes a cover plate provided at an upper portion of the blending chamber, the cover plate having an aperture for the work shaft to pass through

Preferably, the hand blender includes a skirt extending concentrically to the aperture of the cover plate, and a shaft seal located within the skirt.

Further aspects of the invention will become apparent from the following description, which is given by way of example only.

### Brief Description of the Drawings

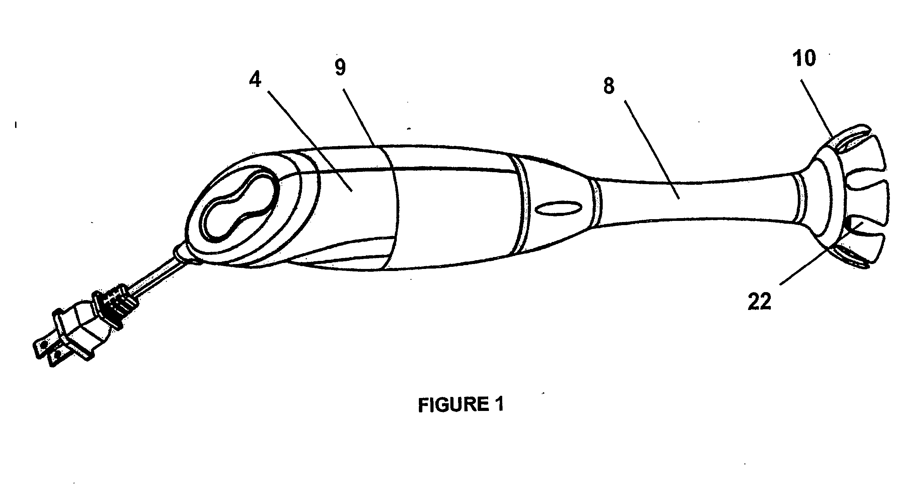

Embodiments of the invention will now be described with reference to the accompanying drawings in which
Figure 1 is a perspective view of a hand blender,

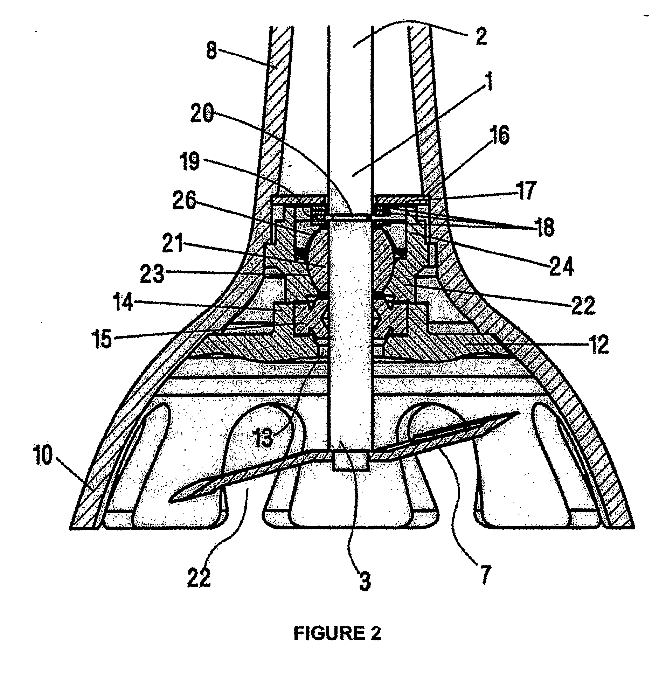

Figure 2 is a sectional view of the lower end of a hand blender according to the invention,

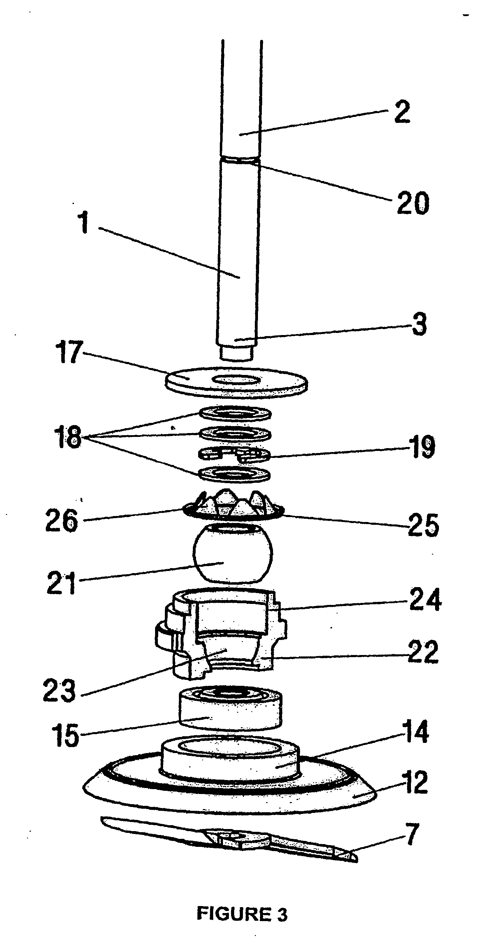

Figure 3 is an exploded view of an assembly within the lower end, and

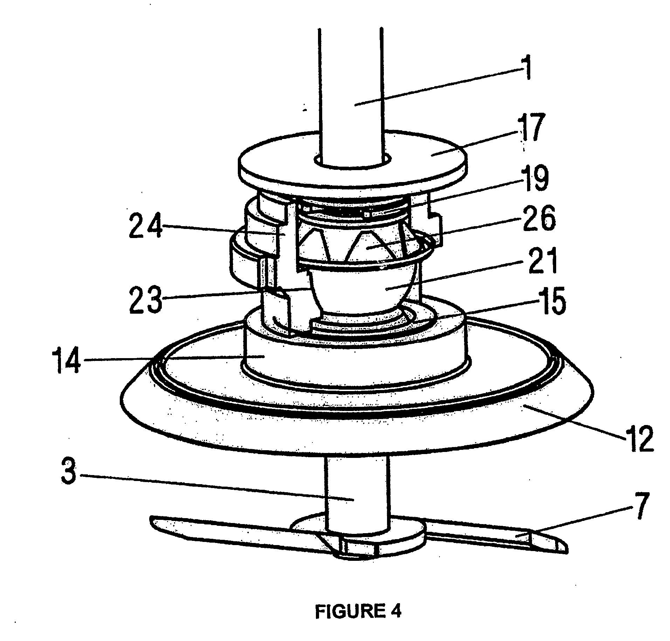

Figure 4 is an assembled view of the assembly.

### Description of the Preferred Embodiments

Referring to the drawings, the preferred embodiment of a hand blender according to the invention includes a work shaft 1 having an input end 2 coupled to a drive motor 4, and an output end 3 to which a work element, in the form of blending blade 7, is attached.

The work shaft 1 is enclosed within an elongate housing 8 that extends to an upper housing portion 9 which encloses motor 4. The upper housing portion 9 may also be shaped to fit snugly in the palm of a users hand so as to provide a gripping handle for the hand blender.

Opposite handle portion 9 elongate housing 8 extends to an open bell-shaped portion 10 that defines a blending chamber 11. Bell-shaped portion 10 encloses blending blade 7 within blending chamber 11.

The lower periphery of bell-shaped housing portion 10 has a plurality of scallop-shaped cutaway portions 22 around its periphery. These cutaway portions 22 facilitate the flow of the blended medium through blending chamber 11 under the affect of blending blade 7.

A cover plate 12 is disposed at the top of blending chamber 11 to close the blending chamber from elongate housing 8. Cover plate has an aperture 13 through which work shaft 1 extends into blending chamber 11. Concentric to aperture 13 is an upwardly extending skirt 14 adapted to receive and locate a shaft seal 15 for aperture 13.

The inner wall of elongate housing 8 has step 16 against which rests a flat block washer 17. Work shaft passes through the aperture in block washer 17. On work shaft output end 3 of block washer 17 are three smaller concentric washers 18. A circlip 19 is received within a groove 20 in the circumference of work shaft 1 to locate the washers.

A spherical bush 21 is fixedly mounted on work shaft 1 at a position between circlip 19 and shaft seal 15. Within elongate housing 8 is a bush sleeve 22. Bush sleeve 22 engages against the inner wall of elongate housing 8 to frictionally locate it within elongate housing 8 between block washer 17 and cover plate 12. A bore 23 extends through sleeve 22 through which work shaft 1 passes.

The inner surface of bore 23 is substantially concave shaped to receive the spherical bush 21 within the bore. A concentric skirt extends concentrically upwards from concave bore 23 to enclose the bush 21. A lock washer 25 locates within concentric skirt 24. Extending radially inwards and upwardly from the inner periphery of lock washer 25 are tabs 26. Tabs 26 retain bush 23 within concave bore 21.

The combination of spherical bush 21 received within bush sleeve 22 provides a bush type bearing to rotatably support the output end 3 of work shaft 1 within elongate housing 8. The spherical nature of the bearing makes it more tolerant to miss-alignment of work shaft 1 and housing 8 due to manufacturing tolerances and operational stresses.

Where in the foregoing description reference has been made to integers or elements having known equivalents then such are included as if individually set forth herein within the scope of the appended claims.

Embodiments of the invention have been described, however it is understood that variations or modifications can take place without departure from the scope of the appended claims.

## Claims

1. A hand blender including:
an elongate body (8) defining a blending chamber (11) at one end,
a work shaft (1) provided within the body and having an input end (2) and an output end (3),
a motor (4) within the body and coupled with the input end of the work shaft,
a work element (7) within the blending chamber and coupled to the output end of the work shaft, and
a sleeve (22) provided within the body and having an aperture (23) through which the work shaft passes,
**characterised in that** the sleeve has a substantially convex shaped recess (23) concentric with the aperture, a bush (21) is provided on the work shaft and is adapted to locate within the recess (23) of the sleeve, and **in that** the bush (21) is fixedly engaged with the work shaft and adapted to rotate within the recess.

2. A hand blender as claimed in claim 1 **characterised by** a locking washer (25) with tabs (26) for retaining the bush within the recess.

3. A hand blender as claimed in any preceding claim **characterised in that** the recess (23) is integral with the aperture and the sleeve (22) has a skirt (24) enclosing the bush (21).

4. A hand blender as claimed in any preceding claim **characterised by** a cover plate (12) provided at an upper portion of the blending chamber (11), the cover plate having an aperture (13) for the work shaft to pass through.

5. A hand blender as claimed in claim 4 **characterised by** a skirt (14) extending concentrically to the aperture (13) of the cover plate, and a shaft seal (15) located within the skirt.

## Patentansprüche

1. Handmixer, der Folgendes umfasst:
einen länglichen Körper (8), der an dem einem Ende eine Mixkammer (11) definiert,
eine Arbeitswelle (1), die innerhalb des Körpers bereitgestellt wird und ein Antriebsende (2) und ein Abtriebsende (3) hat,
einen Motor (4) innerhalb des Körpers und gekoppelt mit dem Antriebsende der Arbeitswelle,
ein Arbeitselement (7) innerhalb der Mixkammer und gekoppelt an das Abtriebsende der Arbeitswelle, und
eine Hülse (22), die innerhalb des Körpers bereitgestellt wird und eine Öffnung (23) hat, durch welche die Arbeitswelle hindurchgeht,
**dadurch gekennzeichnet, dass** die Hülse eine im Wesentlichen konvex geformte Aussparung (23), konzentrisch mit der Öffnung, hat, eine Buchse (21) an der Arbeitswelle bereitgestellt wird und dafür eingerichtet ist, innerhalb der Aussparung (23) der Hülse angeordnet zu sein, und **dadurch**, dass die Buchse (21) unbeweglich in Eingriff mit der Arbeitswelle und dafür eingerichtet ist, sich innerhalb der Aussparung zu drehen.

2. Handmixer nach Anspruch 1, **gekennzeichnet durch** eine Verriegelungsscheibe (25) mit Laschen (26) zum Festhalten der Buchse innerhalb der Aussparung.

3. Handmixer nach einem der vorhergehenden Ansprüche, **dadurch gekennzeichnet, dass** die Aussparung (23) integral mit der Öffnung ist und die Hülse (22) einen Saum (24) hat, der die Buchse (21) umschließt.

4. Handmixer nach einem der vorhergehenden Ansprüche, **gekennzeichnet durch** eine Abdeckplatte (12), die an einem oberen Abschnitt der Mixkammer (11) bereitgestellt wird, wobei die Abdeckplatte eine Öffnung (13) hat, damit die Arbeitswelle hindurchgeht.

5. Handmixer nach Anspruch 4, **gekennzeichnet durch** einen Saum (14), der sich konzentrisch zur Öffnung (13) der Abdeckplatte erstreckt, und eine innerhalb des Saums angeordnete Wellendichtung (15).

## Revendications

1. Mixer à main, englobant:
un corps allongé (8) définissant une chambre de mélange (11) au niveau d'une extrémité;
un arbre de travail (1) agencé dans le corps et comportant une extrémité d'entrée (2) et une extrémité de sortie (3);
un moteur (4) agencé dans le corps et accouplé à l'extrémité d'entrée de l'arbre de travail;
un élément de travail (7) agencé dans la chambre de mélange et accouplé à l'extrémité de sortie de l'arbre de travail; et
un manchon (22) agencé dans le corps et comportant une ouverture (23) que traverse l'arbre de travail;
**caractérisé en ce que** le manchon comporte un évidement de forme pratiquement convexe (23), concentrique à l'ouverture, une douille (21) étant agencée sur l'arbre de travail et étant adaptée pour être positionnée dans l'évidement (23) du manchon, la douille (21) étant engagée fermement dans l'arbre de travail et étant adaptée pour tourner dans l'évidement.

2. Mixer à main selon la revendication 1, **caractérisé par** une rondelle de verrouillage (25), comportant des pattes (26) pour retenir la douille dans l'évidement.

3. Mixer à main selon l'une quelconque des revendications précédentes, **caractérisé en ce que** l'évidement (23) fait partie intégrante de l'ouverture, le manchon (22) comportant une bordure (24) renfermant la douille (21)

4. Mixer à main selon l'une quelconque des revendications précédentes, **caractérisé par** une plaque de couverture (12) agencée au niveau d'une partie supérieure de la chambre de mélange (11), la plaque de couverture comportant une ouverture (13) que peut traverser l'arbre de travail.

5. Mixer à main selon la revendication 4, **caractérisé par** une bordure (14) s'étendant de manière concentrique à l'ouverture (13) de la plaque de couverture, et un joint de l'arbre (15) positionne dans la bordure.
